# EUROPEAN PATENT APPLICATION

(11) **EP 4 513 619 A1**
(43) Date of publication of application: **26.02.2025**
(21) Application number: 24189077.1
(22) Date of filing: 17.07.2024
(51) Int. Cl.: H01M 10/48, H01M 50/107, H01M 50/213, H01M 50/503, H01M 50/507, H01M 50/509, H01M 50/519, H01M 50/569

(54) **CCS ASSEMBLY AND BATTERY MODULE**

(30) Priority: 25.08.2023 CN 202311088216; 25.08.2023 CN 202322312932 U
(71) Applicant: Eve Energy Co., Ltd., Huizhou, Guangdong 516006 (CN)
(72) Inventor: Chen, Jingcong, Huizhou,Guangdong, 516006 (CN)
(74) Representative: Petraz, Gilberto Luigi

(57) **Abstract**

Disclosed in the disclosure is a CCS assembly and a battery module. The CCS assembly includes: a support structure; a guiding structure, connected to the support structure, including an input of busbar, an output of busbar, and a connection segment of busbar, in which the output of busbar and the input of busbar are provided on two opposite ends of the plurality of columns of cells in the second direction and are electrically connected to a column of cells; two FPCs, provided on two opposite sides of the plurality of columns of cells in a first direction, each FPC being extended in the second direction and electrically connected to the connection segment of busbar respectively; and two connectors, provided on two opposite sides of the plurality of columns of cells in the first direction and electrically connected to one piece of the FPC respectively, disposed corresponding to an end with a gap in a column of cells relative to an adjacent column of cells.

## Description

### Technical Field

The present disclosure relates to the technical field of batteries and, particularly, to a Cells Contact System (hereinafter referred as CCS) assembly and a battery module.

### Background

In a power battery, a CCS assembly is electrically connected to the cells to achieve electrical signal transmission with the Battery Management System (hereinafter referred as BMS), and the CCS assembly is mounted on a top of cells and provided side-by-side in an arrangement direction of cells. CCS assembly generally includes a plastic support, Flexible Printed Circuit (hereinafter referred as FPC), temperature collecting member, voltage collecting member, connection segment of busbar and electrical connector through which to achieve the information transfer with the BMS to monitor the using status of the battery.

In the CCS assembly of the related art, as the CCS assembly is provided in an arrangement direction along multiple columns of cells, the plastic support is required to extend outwardly by a certain length to be able to support the mounting of the connector, which leads to an increase in a length of the entire CCS assembly, occupies space within the battery module, and reduces the energy density and space utilization of the battery module.

### Summary

The present disclosure aims to solve the following technical problem: how to reduce the space occupied by the CCS assembly within the battery module, which allows more cells to be set up in the battery module, improves the space utilization, and ensures the energy density of the battery module.

As a first aspect, provided in the present disclosure is a CCS assembly, applied to a battery module, the battery module including a plurality of columns of cells, the CCS assembly being provided on a top of the plurality of columns of cells provided crisscrossed in a second direction, the CCS assembly including: a support structure, provided on a top of the plurality of columns of cells; a guiding structure, connected to the support structure, including an input of busbar, an output of busbar, and a connection segment of busbar, in which the output of busbar and the input of busbar are provided on two opposite ends of the plurality of columns of cells in the second direction and are electrically connected to one column of cells, respectively, the connection segment of busbar is provided between the input of busbar and the output of busbar to electrically connect to the cells so as to achieve a series and parallel connection of the plurality of columns of cells; two FPCs, connected to the support structure respectively, provided on two opposite sides of the plurality of columns of cells in a first direction, each FPC being extended in the second direction and electrically connected to the connection segment of busbar respectively; and two connectors, provided on two opposite sides of the plurality of columns of cells in the first direction and electrically connected to one piece of the FPC respectively, disposed corresponding to an end with a gap in a column of cells relative to an adjacent column of cells.

As a second aspect, provided in the present disclosure is a battery module, including the aforementioned CCS assembly.

As cells in each column are arranged in a first direction X and a plurality of columns of cells are provided crisscrossed in a second direction Y, gaps present in a column of cells relative to another adjacent column of cells along an end of the first direction X for each of two adjacent columns of cells. Therefore, when setting up the CCS assembly on a top of cells, the connector is provided on an end of the column where cells are positioned in the first direction, which allows the connector to be mounted in the gap formed by the cells in a certain column, fully utilizing the space of the gap between cells. Therefore, the support is unnecessary to be protruded in an arrangement direction of a plurality of columns of cells, and the connector is also unnecessary to occupy more space in the arrangement direction of the plurality of columns of cells. That is, cells are not required to be protruded in the second direction Y, which ensures a length of the entire CCS assembly. When applying the CCS assembly to a battery module, the CCS assembly may not occupy too much space within the battery module, which allows more cells to be set up, improves the space utilization, and ensures the energy density of the battery module.

### Brief description of the drawings

Fig. 1 is a structural diagram of a battery module of an embodiment of the present disclosure;
Fig. 2 is an exploded view of the battery module of Fig. 1;
Fig. 3 is a structural diagram of the battery module of Fig. 1 with the connector removed;
Fig. 4 is a top view of the battery module of Fig. 1;
Fig. 5 is an exploded view of the hot-pressing film, FPC, and connector of Fig. 1;
Fig. 6 is a structural diagram of the support of Fig. 1;
Fig. 7 is an exploded view of the FPC, reinforcing plate, and connector of Fig. 1;
Fig. 8 is a structural diagram of cells and sub-busbars of Fig. 1;
Fig. 9 is a top view of cells and sub-busbars of Fig. 7;
Fig. 10 is a structural diagram of the sub-busbar of Fig. 7;
Fig. 11 is a structural diagram of the cell of an embodiment of the present disclosure.

The meanings of the attached markings are as follows:
100 CCS assembly; 10 support structure; 11 hot-pressing film; 111 upper film; 112 lower film; 113 profiled hole; 12 support; 121 first avoidance gap; 122 hot-riveting post; 123 mounting groove; 20 guiding structure; 21 input of busbar; 211 input pole; 22 output of busbar; 221 output pole; 23 connection segment of busbar; 231 sub-busbar; 2311 primary connecting rib; 2312 conductive section; 2313 current limiting hole; 2314 second avoidance gap; 2315 convex segment; 30 FPC; 31 third avoidance gap; 40 connector; 50 reinforcing plate; 200 battery module; 220 first cell column; 230 second cell column; 232 gap; 310 positive electrode; 320 housing.

### Detailed description of the embodiments

In some implementations, the support structure includes two supports spaced apart and a hot-pressing film, the supports are provided on two opposite sides of the plurality of columns of cells in the first direction, and the hot-pressing film is connected between two supports.

In some implementations, a side of the support towards the cells is provided with a plurality of first avoidance gaps, and a shape of the first avoidance gap is adapted to shapes of cells so that the support fits on surfaces of cells.

In some implementations, the hot-pressing film includes an upper film and a lower film, the FPC and the guiding structure are provided between the upper film and the lower film, and the guiding structure is exposed with respect to the upper film and the lower film.

In some implementations, the connector is connected to a side of the FPC towards a column of cells and is provided corresponding to the gap.

In some implementations, a side of the support opposite to the cells in the first direction is provided with a mounting groove provided corresponding to the gap, and the connector is provided in the mounting groove.

In some implementations, the connection segment of busbar includes a plurality of sub-busbars disposed sequentially side-by-side in the second direction, and each sub-busbar is connected in series with two adjacent cells disposed crisscrossed in the second direction and in parallel with two adjacent columns of cells.

In some implementations, the sub-busbar includes a primary connecting rib extending in the first direction and a plurality of conductive sections connected in parallel with the primary connecting rib in the first direction, the primary connecting rib is connected to positive electrodes of cells, and the conductive sections are connected to negative electrodes of cells.

In some implementations, at least one end of the primary connecting rib is provided in the first direction with a convex segment used to be connected to the FPC.

In some implementations, both ends of the primary connecting rib are provided in the first direction with the convex segment, one of the convex segments is used to be connected to one of the FPC, and the other FPC is provided with a third avoidance gap at a position corresponding to the other convex segment.

The present disclosure is further described below in conjunction with the attached drawings.

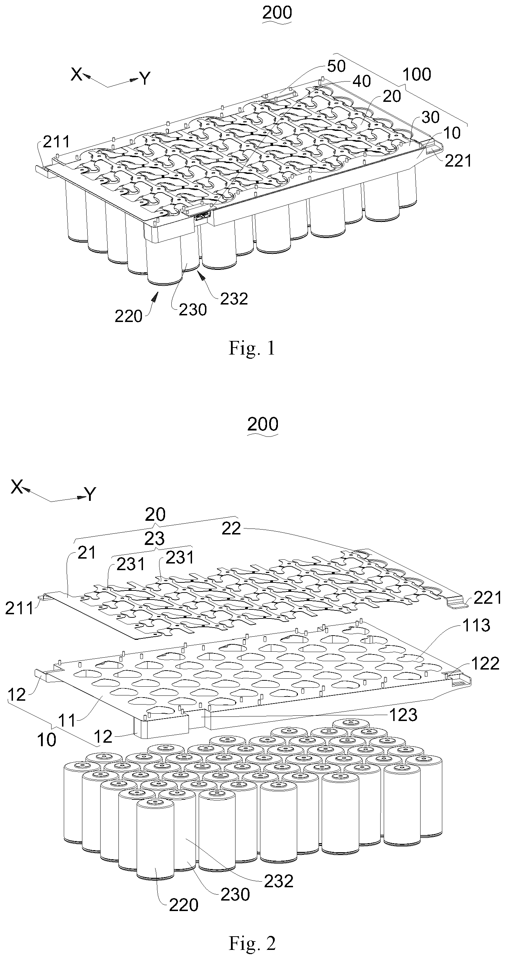

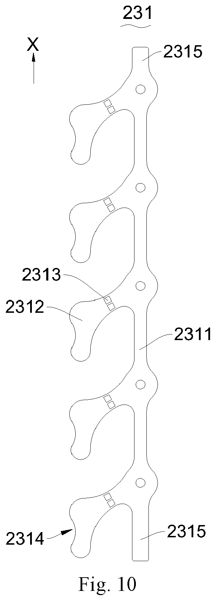

Please refer to Figs. 1-11, the CCS assembly 100 provided in an embodiment of the present disclosure includes a support structure 10, a guiding structure 20, two FPCs 30, and two connectors 40. When applying the CCS assembly 100 to a battery module 200, the battery module 200 includes a plurality of columns of cells 300, and the CCS assembly 100 is provided on a top of the plurality of columns of cells 300. Cells 300 are arranged in a first direction X, and a plurality of columns of cells 300 are provided crisscrossed in a second direction Y Specifically, the cells in the present embodiment are cylindrical cells.

Referring to Figs. 1-4, the support structure 10 is provided on a top of the plurality of columns of cells 300; the guiding structure 20 is connected to the support structure 10, including an input of busbar 21, an output of busbar 22, and a connection segment of busbar 23, in which the output of busbar 21 and the input of busbar 22 are provided on two opposite ends of the plurality of columns of cells 300 in the second direction Y and are electrically connected to a column of cells 300; two FPCs 30 are connected to the support structure 10 respectively and provided on two opposite sides of the plurality of columns of cells 300 in a first direction X, each FPC 30 being extended in the second direction Y and electrically connected to the connection segment of busbar 23 respectively; and two connectors 40 are provided on two opposite sides of the plurality of columns of cells 300 in the first direction X, electrically connected to one piece of the FPC 30 respectively, and disposed corresponding to an end with a gap in a column of cells 300 relative to an adjacent column of cells 300.

As cells 300 in each column are arranged in a first direction X and a plurality of columns of cells 300 are provided crisscrossed in a second direction Y, gaps 232 present in a column of cells 300 relative to another adjacent column of cells 300 along an end of the first direction X for each of two adjacent columns of cells 300. Therefore, when setting up the CCS assembly 100 on a top of cells 300, the connector 40 is provided on an end of the column where cells 300 are positioned in the first direction X, which allows the connector 40 to be mounted in the gap 232 formed by the cells 300 in a certain column, fully utilizing the space of the gap 232 between cells 300. Therefore, the support 12 is unnecessary to be protruded in an arrangement direction of a plurality of columns of cells 300, and the connector 40 is also unnecessary to occupy more space in the arrangement direction of the plurality of columns of cells 300. That is, cells 300 are not required to be protruded in the second direction Y, which ensures a length of the entire CCS assembly 100. When applying the CCS assembly 100 to a battery module 200, the CCS assembly 100 may not occupy too much space within the battery module 200, which allows more cells 300 to be set up, improves the space utilization, and ensures the energy density of the battery module 200.

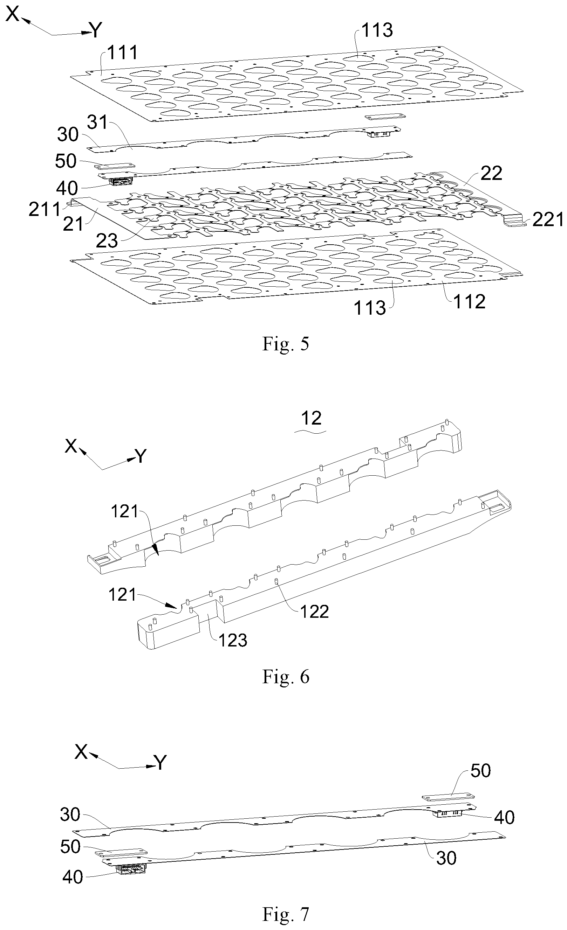

Please refer to Fig. 5 and Fig. 6, in an implementation of the present disclosure, for facilitating the formation of the support structure 10, the support structure 10 includes two supports 12 spaced apart and a hot-pressing film 11, the supports 12 are provided on two opposite sides of the plurality of columns of cells 300 in the first direction X, and the hot-pressing film 11 is connected between two supports 12. In such a setup, by configuring the support structure 10 to include supports 12 and a heat-pressing film 11 separately, following beneficial effects are achieved:

(1) When setting up the support structure 10, two supports 12 clamp at two opposite sides of the plurality of columns of cells 300 in the first direction X, facilitating the positioning and mounting of the cells 300, avoiding the interference in assembling the CCS assembly 100 and the cells 300 caused by over-positioning of the plastic support with the cells 300 due to a tolerance in stacking of the cells 300 and a tolerance in manufacturing of an integral plastic support, improving the assembly efficiency of the CCS assembly 100 and the cells 300, improving the product yield.

(2) The hot-pressing film 11 is capable of absorbing the expansion of the cells 300 due to a certain degree of softness when expansion of the cells 300 takes place during use.

(3) Two separated supports 12 are provided to facilitate the molding of each support 12, which reduces the production cost of the supports 12 relative to that of an integral plastic support.

Specifically, to allow a better clamping effect of the two supports 12 on the cells 300, a side of the support 12 towards the cells 300 is provided with a plurality of first avoidance gaps 121, and a shape of the first avoidance gap 121 is adapted to shapes of cells 300 so that the support 12 fits on surfaces of cells 300. In such a setup, by providing the first avoidance gap 121 on the support 12, the support 12 fits on side surfaces of cells 300 in an axial direction of cells 300 when setting up the support 12 on side surfaces of cells 300 in the first direction X. The supports 12 on both sides clamp the cells 300 arranged crisscrossed on both sides in the first direction X, so that the first avoidance gap 121 serves to positioning the cells when mounting the entire CCS assembly 100 on a top of the cells 300, which facilitates the mounting between the CCS assembly 100 and the cells 300.

It is understood that, as the cells 300 are provided crisscrossed in the second direction Y, for facilitating description, two adjacent columns of cells 300 are selected for description, in which the two adjacent columns of cells 300 are defined as a first cell column 220 and a second cell column 230. As shown in Fig. 1 to Fig. 3, in an end of the first direction X, the first cell column 220 is protruded from the second cell column 230, and the second cell column 230 is provided with a gap 232 with respect to the first cell column 220. The supports 12 are provided in the first direction X with the first avoidance gap 121 corresponding to where the first cell column 220 is protruded, so that the supports 12 are adapted to the cells 300 disposed crisscrossed and clamp at two opposite sides of the plurality of cells 300.

Specifically, in the present embodiment, the supports 12 are made of a composite material with polycarbonate (PC) and Acrylonitrile Butadiene Styrene (ABS), and the composite material with PC+ABS offers excellent heat and weather resistance performance, dimensional stability, and impact resistance properties, allowing for application in the support structure 10 of the CCS assembly 100.

Referring to Fig. 5, when setting up the hot-pressing film 11, for ensuring the insulation protection effect of the support structure 10 on the FPC 30 and the guiding structure 20 as well as ensuring the support strength of the entire support structure 10 when the support structure 10 is mounted with the FPC 30 and the guiding structure 20, the hot-pressing film 11 includes an upper film 111 and a lower film 112, in which the FPC 30 is provided between the upper film 111 and the lower film 112, and the guiding structure 20 may be exposed with respect to the upper film 111 and the lower film 112, so that insulating support and protection is achieved on the FPC 30 and the guiding structure 20 by the upper film 111 and the lower film 112, thereby ensuring the structural strength of the entire hot-pressing film 11.

Specifically, both the upper film 111 and the lower film 112 in the present embodiment are films made of polycarbonate (PC), while the upper film 111 and the lower film 112 in other embodiments may be films made of polyethylene terephthalate (PET).

When exposing the guiding structure 20 from between the upper film 111 and the lower film 112, profiled holes 113 are provided correspondingly on the upper film 111 and the lower film 112, so that the portion of the guiding structure 20 requiring welding connection with the cells 300 is exposed through the profiled holes 113.

Further, referring to Fig. 6, when connecting the supports 12 and the hot-pressing film 11, the supports 12 are provided with hot-riveting posts 122, so that the hot-pressing film 11 is connected to the supports by means of the hot-riveting posts 122. In such a setup, when connecting the supports 12 and the hot-pressing film 11, positioning is first achieved by the hot-riveting posts 122, and the supports 12 and the hot-pressing film 11 are connected to form a single unit by means of the hot-riveting posts 122. That is, the supports 12 are connected to the upper film 111 and the lower film 112 to form a single unit respectively, so as to ensure the connection stability of the supports 12 to the upper film 111 and the lower film 112 respectively.

Referring to Fig. 1 to Fig. 4 and Fig. 7, when connecting the connector 40 to the FPC 30, for avoiding the connector 40 occupying a top space of the cells 300, the connector 40 is connected to a side of the FPC 30 towards the cells 300 and provided corresponding to the gap 232. In such a setup, the connector 40 is disposed in reverse on a side of the FPC 30, which fully utilizes the space at the end of the cells 300 in the first direction X, so that the connector 40 may be provided in parallel to the cells 300 in the first direction X to avoid providing on a top of the FPC 30 to occupy the space of cells in an axial direction leading to an increase in a height of the battery module 200 applying with the CCS assembly 100.

Further, for increasing the connection strength of the connector 40 mounted on the FPC 30, a reinforcing plate 50 is also provided between the connector 40 and the FPC 30. Specifically, the reinforcing plate 50 is a FR-4 grade flame resistant material bonded to the FPC 30 so that the FPC 30 and the supports 12 may be secured by hot-pressing by means of the reinforcing plate 50 and the hot-riveting posts 122 when connecting the FPC 30 to the supports 12.

Circuit traces are achieved by an etching process on the FPC 30 of the present embodiment, and the FPC 30 is directly welded to the connection segment of busbar 23, with nickel plating locally at the welding places between the FPC 30 and the connection segment of busbar 23, with voltage being collected through the FPC 30 and transmitted to the connector 40 for outputting a voltage signal through the connector 40.

Further, referring to Fig. 1 to Fig. 4 and Fig. 6, for reasonably utilizing the remaining space resulting from the arrangement of the cells 300, a side of the support 12 opposite to the cells 300 in the first direction X is provided with a mounting groove 123 provided corresponding to the gap 232 formed by the column where the cells 300 are positioned, and the connector 40 is disposed in the mounting groove 123. In such a setup, the crisscrossed remaining space resulting from the arrangement of the cells 300 is fully utilized to avoid the mounting of the connector 40 in the first direction X protruding from the support 12 thereby occupying space.

Specifically, when forming the CCS assembly 100 of the present embodiment, the FPC 30 and the guiding structure 20 are provided in parallel between the upper film 111 and the lower film 112, and the FPC 30 and the guiding structure 20 are hot-pressed into a single unit by means of the upper film 111 and the lower film 112. Through-holes are provided on the FPC 30, upper film 111 and lower film 112 for threading the hot-riveting posts 122 correspondingly, and the entirety is then riveted to the supports 12, so as to be mounted as a CCS assembly 100.

Please refer to Fig. 1 to Fig. 5, Fig. 8 and Fig. 9, in an implementation of the present disclosure, corresponding to a manner that the FPC 30 is extended in the second direction Y, the connection segment of busbar 23 includes a plurality of sub-busbars 231 disposed sequentially side-by-side in the second direction Y, and each sub-busbar 231 is connected in series with two adjacent cells 300 disposed crisscrossed in the second direction Y and in parallel with two adjacent columns of cells 300. In such a setup, the series and parallel connection of the plurality of columns of cells 300 are achieved by means of the plurality of sub-busbars 231.

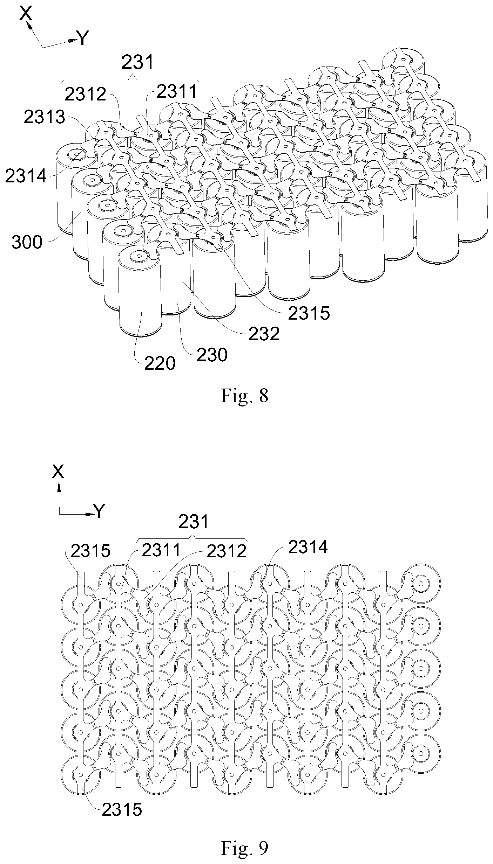

Specifically, referring to Fig. 8 to Fig. 10, the sub-busbar 231 includes a primary connecting rib 2311 extending in the first direction X and a plurality of conductive sections 2312 connected in parallel with the primary connecting rib 2311 in the first direction X, the primary connecting rib 2311 is connected to positive electrodes 310 of cells 300, and the conductive sections 2312 are connected to negative electrodes of the cells 300. By setting up a plurality of conductive sections 2312, an end of each conductive section 2312 distal to the primary connecting rib 2311 is electrically connected to a negative electrode of a cell 300. When the current flows in a series direction, the current flows from the conductive section 2312 to the primary connecting rib 2311 electrically connected to a positive electrode 310 of a cell 300, so that the current flows from a positive electrode 310 of a cell 300 to a negative electrode thereof, so as to achieve the series connection of the plurality of cells 300 provided crisscrossed in the second direction Y As the primary connecting rib 2311 is extended in the first direction X, a plurality of conductive sections 2312 are connected in parallel to the primary connecting rib 2311, so as to achieve the parallel connection of the plurality of cells 300.

It is to be understood that, as the conductive section 2312 needs to be in series connection to the positive electrodes 310 of two cells 300 provided crisscrossed, an acute included angle is configured between the conductive section 2312 and the primary connecting rib 2311 to be adapted to the arrangement of the cells 300 in series connection.

Additionally, as two sub-busbars 231 need to be connected to each three adjacent cells 300, the directions of the conductive sections 2312 connected to the negative electrodes are opposite in two adjacent sub-busbars 231. That is, an opening of the included angle between the conductive section 2312 and the primary connecting rib 2311 of a sub-busbar 231 is facing to an end of the first direction X, while an opening of the included angle between the conductive section 2312 and the primary connecting rib 2311 of an adjacent sub-busbar 231 is facing to an opposite end of the first direction X, which avoids misplacement when connecting the sub-busbar 231 and the cells 300, offering a fool-proofing effect.

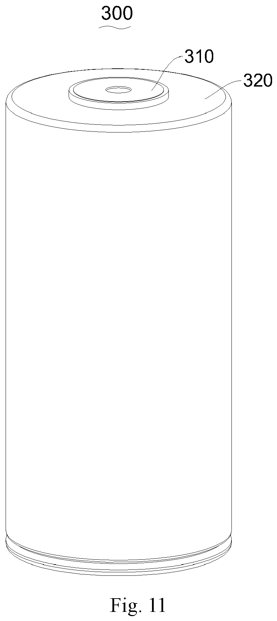

Specifically, as the positive pole of a cell 300 is the positive electrode 310, the primary connecting rib 2311 is connected to positive poles of the cells 300, and the conductive sections 2312 are connected to the negative electrodes. Specifically, please refer to Fig. 11, which is the structural diagram of a cell 300, as a housing 320 of the cell 300 is negatively charged, the conductive sections 2312 are electrically connected to the housings 320 of cells.

As the conductive sections 2312 of the present embodiment have a certain length and elastic properties, when welding the sub-busbars 231 and the housings 320 of the cells 300 to be connected, the connection between the conductive sections 2312 and the housings 320 is directly performed by pressing the conductive sections 2312 downward towards the housings 320, which avoids a bending process of the conductive sections 2312 to form a height difference in order to accommodate a height difference between the positive and negative electrodes of the cells 300, improves the product yield and reduces the production cost.

As the conductive sections 2312 are connected to the negative electrodes of cells 300, it needs to avoid contact to the positive electrodes of cells 300. For allowing a greater connection area between the conductive sections 2312 and the housings 320 negatively charged, the conductive sections 2312 are provided with second avoidance gaps 2314 in arc shape to avoid contact to the positive poles, so that the conductive sections 2312 are welded in contact with the housings 320 negatively charged as much as possible, ensuring the connection stability between the conductive sections 2312 and the negative electrodes.

The sub-busbars 231 of the present embodiment are plates made of aluminum 1060 providing excellent conductivity, malleability and stability, allowing for stable current conduction between cells 300.

Further, for protecting the battery module 200 during use, the conductive sections 2312 are provided with a fuse protection structure, in which the fuse protection structure includes at least one current limiting hole 2313 provided on the conductive sections 2312. There may be provided with one or more current limiting holes 2313 according to actual demand. By setting up the current limiting holes 2313, a conductive area of the conductive sections 2312 is decreased in a current flowing direction. When excessive current flows in the circuit, i.e., when the circuit is overloaded, the conductive sections 2312 are rendered to be disconnected at high temperatures to provide protection to the circuit, improving the safety performance of the entire battery module 200.

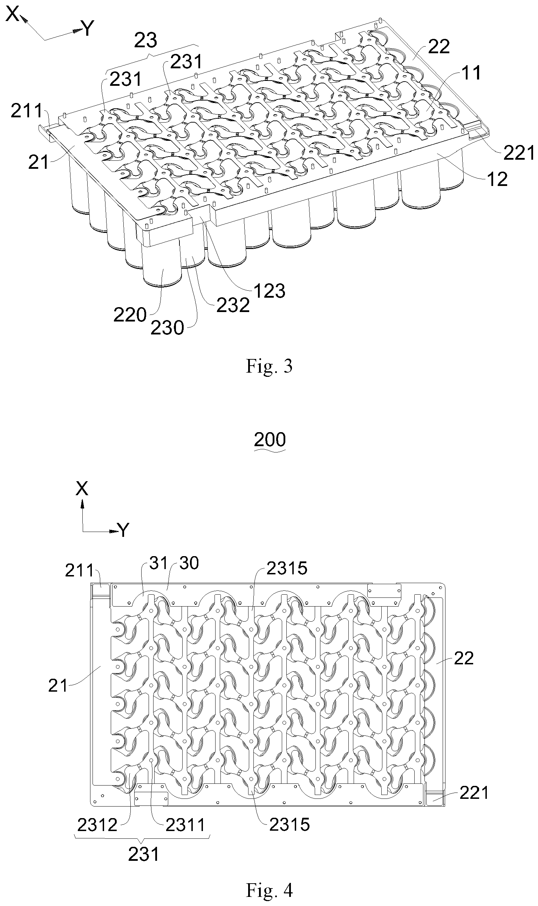

Please refer to Fig. 4 and Fig. 8 to Fig. 10, in an embodiment of the present disclosure, for facilitating the welding connection between the connection segment of busbar 23 and the FPC 30, at least one end of the primary connecting rib 2311 is provided in the first direction X with a convex segment 2315 used to be connected to the FPC 30. That is, the convex segment 2315 corresponding to where the cells 300 form a gap 232 is connected to the FPC 30. In such a setup, when connecting the FPC 30 to the sub-busbars 231, nickel is directly plated on the FPC 30, and a welding connection is made between the nickel-plated points and the convex segment 2315 of the primary connecting rib 2311. Compared to the prior art, nickel sheet needs to be welded to the aluminum plate to be welded with the FPC 30. The setup in the present disclosure improves the connection efficiency between the FPC 30 and the sub-busbars 231, which is more convenient to the welding operation between the FPC 30 and the sub-busbars 231.

Additionally, when collecting the voltage, as only one end of the primary connecting rib 2311 needs to be welded to the FPC 30, for decreasing the production cost of the sub-busbars 231, both ends of the primary connecting rib 2311 are provided in the first direction X with the convex segment 2315, one of the convex segments 2315 is used to be connected to one of the FPC 30, and the other FPC 30 is provided with a third avoidance gap 31 at a position corresponding to the other convex segment 2315. In such a setup, when producing the sub-busbars 231, it is possible to use an identical mold to obtain a substrate of the same length extending in the first direction X. Then, the substrate is formed to produce a specific structure of the sub-busbars 231 so as to facilitate the production of all sub-busbars 231. In such a setup, when collecting the voltage, a third avoidance gap 31 is provided on the FPC to avoid contact to the other one of the convex segments 2315 to achieve the connection between the FPC 30 and the sub-busbars 231, so that the convex segment 2315 connected to the FPC 30 transmits the voltage information to the FPC 30.

It is to be understood that the third avoidance gaps 31 on the FPC 30 are provided corresponding to the first avoidance gaps 121 on the support 12.

Referring to Fig. 1 to Fig. 5, in the present embodiment, the input of busbar 21 has an input pole 211, and the output of busbar 22 has an output pole 221. The input pole 211 and the output pole 221 are both used to connect an external circuit, in which the input pole 211 is connected to a column of cells 300 arranged at an end in the second direction Y, a cell in the column serving as the current input end, and the output pole 221 is connected to a column of cells 300 arranged at an opposite end in the second direction Y, a cell 300 in the column opposite to the cell 300 at input end and disposed at an end serving as the output end, so as to achieve the current conduction, which transmit the voltage conditions of cells 300 to the BMS by the connector 40.

It is to be understood that the output of busbar 22 is connected to the housing 320 of cells 300 when the input of busbar 21 is connected to positive electrodes 310 of a column of cells 300 at an end of the second direction Y

Provided in a second embodiment of the present disclosure is a battery module 200 including the aforementioned CCS assembly 100 and a plurality of cells 300.

The CCS assembly 100 is provided on a top of the plurality of cells 300 and connected thereto. When the current is conducted for discharging, the current is input from the input pole 211 and transmitted to a cell 300 of the input side. The cell 300 is conducted to the sub-busbar 231 to achieve the conduction between cells 300, which achieves the series connection between cells 300 and the parallel connection between the plurality of cells 300 by means of the input of busbar 21 and the output of busbar 22. Finally, the cell 300 of the output side conducts the current to the output pole 221 to achieve the current conduction. Current flows in an opposite direction when charging.

## Claims

1. A CCS assembly (100), applied to a battery module (200), the battery module (200) comprising a plurality of columns of cells, the CCS assembly (100) being provided on a top of the plurality of columns of cells provided crisscrossed in a second direction, the CCS assembly (100) comprising:
a support structure (10), provided on a top of the plurality of columns of cells;
a guiding structure (20), connected to the support structure (10), comprising an input of busbar (21), an output of busbar (22), and a connection segment of busbar (23), in which the output of busbar (22) and the input of busbar (21) are provided on two opposite ends of the plurality of columns of cells in the second direction and are electrically connected to one column of cells, respectively, the connection segment of busbar (23) is provided between the input of busbar (21) and the output of busbar (22) to electrically connect to the cells so as to achieve a series and parallel connection of the plurality of columns of cells;
two FPCs (30), connected to the support structure (10) respectively, provided on two opposite sides of the plurality of columns of cells in a first direction, each FPC (30) being extended in the second direction and electrically connected to the connection segment of busbar (23) respectively; and
two connectors (40), provided on two opposite sides of the plurality of columns of cells in the first direction and electrically connected to one piece of the FPC (30) respectively, disposed corresponding to an end with a gap in a column of cells relative to an adjacent column of cells.

2. The CCS assembly (100) according to claim 1, wherein the support structure (10) comprises two supports (12) spaced apart and a hot-pressing film (11), the supports (12) are provided on two opposite sides of the plurality of columns of cells in the first direction, and the hot-pressing film (11) is connected between two supports (12).

3. The CCS assembly (100) according to claim 2, wherein a side of the support (12) towards the cells is provided with a plurality of first avoidance gaps (121), and a shape of the first avoidance gap (121) is adapted to shapes of cells so that the support (12) fits on surfaces of cells.

4. The CCS assembly (100) according to claim 2, wherein the hot-pressing film (11) comprises an upper film (111) and a lower film (112), the FPC (30) and the guiding structure (20) are provided between the upper film (111) and the lower film (112), and the guiding structure (20) is exposed with respect to the upper film (111) and the lower film (112).

5. The CCS assembly (100) according to any one of claims 2-4, wherein the connector (40) is connected to a side of the FPC (30) towards a column of cells and is provided corresponding to the gap.

6. The CCS assembly (100) according to claim 5, wherein a side of the support (12) opposite to the cells in the first direction is provided with a mounting groove (123) provided corresponding to the gap, and the connector (40) is provided in the mounting groove (123).

7. The CCS assembly (100) according to any one of claims 1-4, wherein the connection segment of busbar (23) comprises a plurality of sub-busbars (231) disposed sequentially side-by-side in the second direction, and each sub-busbar (231) is connected in series with two adjacent cells disposed crisscrossed in the second direction and in parallel with two adjacent columns of cells.

8. The CCS assembly (100) according to claim 7, wherein the sub-busbar (231) comprises a primary connecting rib (2311) extending in the first direction and a plurality of conductive sections (2312) connected in parallel with the primary connecting rib (2311) in the first direction, the primary connecting rib (2311) is connected to positive electrodes of cells, and the conductive sections (2312) are connected to negative electrodes of the cells.

9. The CCS assembly (100) according to claim 8, wherein at least one end of the primary connecting rib (2311) is provided in the first direction with a convex segment (2315) used to be connected to the FPC.

10. The CCS assembly (100) according to claim 9, wherein both ends of the primary connecting rib (2311) are provided in the first direction with the convex segment (2315), one of the convex segments (2315) is used to be connected to one of the FPC (30), and the other FPC (30) is provided with a third avoidance gap (31) at a position corresponding to the other convex segment (2315).

11. A battery module, comprising the CCS assembly (100) as claimed in any one of claims 1-10.
